# EUROPEAN PATENT APPLICATION

(11) **EP 4 644 650 A1**
(43) Date of publication of application: **05.11.2025**
(21) Application number: 23910866.5
(22) Date of filing: 28.12.2023
(51) Int. Cl.: E05F 15/603, E05F 15/622, B60J 5/04, E05C 17/30

(54) **SUPPORTING ROD COMPONENT, VEHICLE DOOR ASSEMBLY, AND VEHICLE**

(30) Priority: 29.12.2022 CN 202211726620
(71) Applicant: BYD Company Limited, Shenzhen, Guangdong 518118 (CN)
(72) Inventor: LI, Yu, Shenzhen, Guangdong 518118 (CN); HUANG, Xiaolan, Shenzhen, Guangdong 518118 (CN); SHAO, Huanmei, Shenzhen, Guangdong 518118 (CN); LI, Yan, Shenzhen, Guangdong 518118 (CN); HUANG, Meixia, Shenzhen, Guangdong 518118 (CN)
(74) Representative: Aldridge, Henry Alexander
(86) International application number: PCT/CN2023/142908
(87) International publication number: WO 2024/140952

(57) **Abstract**

A supporting rod component (10), which is used for a vehicle door (20) of a vehicle (1000) and comprises a first supporting rod (11) and a second supporting rod (12); one end of the first supporting rod (11) is hinged to the vehicle door (20), and the other end of the first supporting rod (11) is hinged to a vehicle body; one end of the second supporting rod (12) is hinged to the vehicle door (20), and the other end of the second supporting rod (12) is hinged to the vehicle body; and at least one among the first supporting rod (11) and the second supporting rod (12) is an electric supporting rod. Further provided are a vehicle door assembly (100) provided with said supporting rod component (10) and a vehicle (1000). The use of the supporting rod component is advantageous for supporting a vehicle door of a vehicle, therefore facilitating the normal opening and closing of the vehicle door.

## Description

### CROSS-REFERENCE TO RELATED APPLICATIONS

The present disclosure claims priority to and benefits of Chinese Patent Application No. 202211726620.4, filed on December 29, 2022 and entitled "SUPPORTING ROD COMPONENT, VEHICLE DOOR ASSEMBLY, AND VEHICLE". The entire content of the above-referenced disclosure is incorporated herein by reference.

### FIELD

The present disclosure relates to the field of vehicle parts technologies, and specifically, to a supporting rod assembly, a vehicle door assembly, and a vehicle.

### BACKGROUND

With the increase of vehicle ownership year by year, demands of people on vehicles are shifted from an early stage of transportation to appearance, comfort, and electrification. In this background, the vehicle door gradually develops from the original manual switching operation to the direction of electrification and intelligence, which greatly improves vehicle using experience of customers. A butterfly door is a rotating door or a dihedral door that rotates on a fixed axis and presents different attitudes at different obliquity angles of axes. As a special-shaped vehicle door, the butterfly door has opening and closing manners different from those of a conventional vehicle door. A supporting rod in the related art cannot provide reliable support for the butterfly door, and cannot provide a force for effectively supporting opening and closing of the butterfly door.

### SUMMARY

The present disclosure aims to provide a supporting rod assembly, a vehicle door assembly, and a vehicle. The supporting rod assembly is conducive to meeting support for the vehicle door (such as a butterfly door), to realize normal opening and closing of the vehicle door.

To achieve the foregoing objective, the present disclosure provides a supporting rod assembly, applied to a vehicle door of a vehicle, and including a first supporting rod and a second supporting rod. One end of the first supporting rod is configured to be hinged to the vehicle door, and the other end of the first supporting rod is configured to be hinged to a vehicle body. One end of the second supporting rod is configured to be hinged to the vehicle door, and the other end of the second supporting rod is configured to be hinged to the vehicle body. At least one of the first supporting rod and the second supporting rod is an electric supporting rod.

Optionally, one of the first supporting rod and the second supporting rod is an electric supporting rod, and the other is a mechanical supporting rod.

Optionally, the first supporting rod and the second supporting rod are arranged along a longitudinal direction of the vehicle, and a connection line between the first supporting rod and the second supporting rod is set to be parallel to a longitudinal central plane of the vehicle.

Optionally, the first supporting rod is located on a rear side of the second supporting rod along a front-rear direction of the vehicle, and heights of the first supporting rod and the second supporting rod are designed such that when the vehicle door is in an open state, a height of the first supporting rod is greater than a height of the second supporting rod.

Optionally, the first supporting rod is an electric supporting rod, and the second supporting rod is a mechanical supporting rod.

Optionally, the supporting rod assembly is configured as: when the electric supporting rod is in a power-off state, an end that is on the electric supporting rod and that is configured to be hinged to the vehicle door can hover at any position on a preset stroke.

Optionally, the electric supporting rod includes a motor, a limiting member, an outer sleeve, a first inner pipe, an electric supporting rod first end, and an electric supporting rod second end. The first inner pipe is arranged inside the outer sleeve in a movable manner along an axial direction of the outer sleeve, so that a length by which an end of the first inner pipe extends out of the outer sleeve can be adjusted, and the motor and the limiting member are fixedly arranged inside the outer sleeve;
the electric supporting rod first end is connected to one end of the first inner pipe, and is configured to be hinged to the vehicle body, and the electric supporting rod second end is connected to one end of the outer sleeve, and is configured to be hinged to the vehicle door;
an output axis of the motor is in transmission connection with the other end of the first inner pipe, to drive the first inner pipe to move along the axial direction of the outer sleeve; and
the limiting member is configured to lock relative positions of the first inner pipe and the outer sleeve when the motor is in a power-off state, so that the electric supporting rod second end can hover at any position on the preset stroke.

Optionally, the electric supporting rod further includes a coupling and a lead screw;
the output axis of the motor is in transmission connection with the lead screw by the coupling, and the first inner pipe is sleeved on the lead screw and forms a guide screw-nut mechanism with the lead screw; and
the limiting member is configured to limit rotation of the lead screw when the motor is in a power-off state.

Optionally, the electric supporting rod further includes a mounting pipe, a partition plate, a second inner pipe, and a first spring;
the mounting pipe is arranged inside the outer sleeve, an end of the mounting pipe is connected to the electric supporting rod second end, and the motor, the coupling, and the partition plate are axially arranged inside the mounting pipe sequentially;
the second inner pipe is sleeved on the mounting pipe, and is located between the mounting pipe and the outer sleeve, and an end of the second inner pipe away from the motor is connected to the electric supporting rod first end; and
the first spring is sleeved on an outer side of the first inner pipe, and one end of the first spring is connected to the partition plate, and the other end is connected to the second inner pipe.

Optionally, the limiting member includes a cylindrical housing and multiple friction plates, the multiple friction plates are arranged in a stacked manner inside the cylindrical housing along an axial direction of the cylindrical housing; and
the lead screw penetrates the cylindrical housing and is located at the multiple friction plates in the cylindrical housing, an inner wall of a via that is on the multiple friction plates and through which the lead screw passes is frictionally matched with the lead screw, and the multiple friction plates are configured to provide damping that restricts rotation of the lead screw when the motor is in a power-off state.

Optionally, an outer side wall of the cylindrical housing is provided with a protrusion, and the protrusion has a first plugging segment projecting from one of end surfaces of the cylindrical housing and a second plugging segment located on the outer side wall.

Optionally, the mechanical supporting rod is a balance rod, including a balance rod first end, a balance rod inner pipe, a balance rod outer pipe, a gas spring, a second spring, and a balance rod second end;
the balance rod first end is connected to an end of the balance rod inner pipe and is configured to be hinged to the vehicle body, and the balance rod second end is connected to an end of the balance rod outer pipe and is configured to be hinged to the vehicle door;
a pressure cylinder of the gas spring is located inside the balance rod outer pipe and is connected to the balance rod second end, and a piston rod of the gas spring is connected to the balance rod first end; and
the second spring is sleeved on an outer side of the gas spring, one end of the second spring is connected to the pressure cylinder, and the other end is connected to an end that is of the balance rod inner pipe and that is configured to be connected to the balance rod first end.

According to another aspect of the present disclosure, a vehicle door assembly is provided, including a vehicle door and the foregoing supporting rod assembly. The vehicle door is hinged to a vehicle body by a hinged structure, and one end of the first supporting rod and one end of the second supporting rod are separately hinged to the vehicle door.

According to still another aspect of the present disclosure, a vehicle is provided, including the foregoing vehicle door assembly.

In the supporting rod assembly provided in the present disclosure, a double-supporting rod solution is used, that is, the first supporting rod and the second supporting rod are provided. When the supporting rod assembly is applied to the vehicle door (such as a butterfly door) of the vehicle, it is beneficial to improve support strength of the supporting rod assembly. In this way, even when the vehicle door (especially, the butterfly door) has a large weight, the supporting rod assembly provided in the present disclosure is beneficial to ensure a support effect for the vehicle door, to facilitate providing a force for normal opening and closing of the vehicle door.

In addition, in the present disclosure, because at least one of the first supporting rod and the second supporting rod is the electric supporting rod, the vehicle door can be opened and closed electrically, thereby improving door opening and door closing operation experience of a user.

Other features and advantages of the present disclosure will be described in detail in the following detailed description part.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation to the present disclosure. In the accompanying drawings:
FIG. 1 is a schematic main view of a vehicle door assembly from an outer perspective according to an embodiment of the present disclosure, where a vehicle door is in a closed state;
FIG. 2 is a schematic main view of a vehicle door assembly from an inner perspective according to an embodiment of the present disclosure, where a vehicle door is in a closed state;
FIG. 3 is a schematic main view of a vehicle door assembly from an outer perspective according to an embodiment of the present disclosure, where a vehicle door is in an open state;
FIG. 4 is a schematic main view of a partial structure of a vehicle door assembly according to an embodiment of the present disclosure;
FIG. 5 is a schematic diagram of a vehicle door assembly from a rear perspective according to an embodiment of the present disclosure, where a vehicle door is in an open state;
FIG. 6 is a schematic longitudinal sectional view of an electric supporting rod (first supporting rod) in a supporting rod assembly according to an embodiment of the present disclosure;
FIG. 7 is an enlarged schematic diagram of part A in FIG. 6;
FIG. 8 is a schematic diagram of a stereoscopic structure of a limiting member of an electric supporting rod according to an embodiment of the present disclosure; and
FIG. 9 is a schematic longitudinal sectional view of a mechanical supporting rod (second supporting rod) in a supporting rod assembly according to an embodiment of the present disclosure.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

In the present disclosure, if not described to the contrary, direction words such as "up, down, front, and rear" are usually directions of up, down, front, and rear of a vehicle in a normal form state. For example, a direction of a head of a vehicle is the front, a direction of a rear of a vehicle is the rear, up is the top of a vehicle, and down is the bottom of a vehicle. "Inside and outside" mean inside and outside of the relevant parts. Furthermore, terms such as "first" and "second" are used in the present disclosure to distinguish an element from another element, and are not of sequence or importance.

As mentioned above, for a special form of a vehicle door such as a butterfly door, manners of opening and closing the butterfly door are different from those of opening and closing an existing conventional vehicle door. In addition, generally, the butterfly door has a large weight, and a supporting rod in the related art cannot provide reliable support for the butterfly door, and cannot provide a force for effectively supporting opening and closing of the butterfly door.

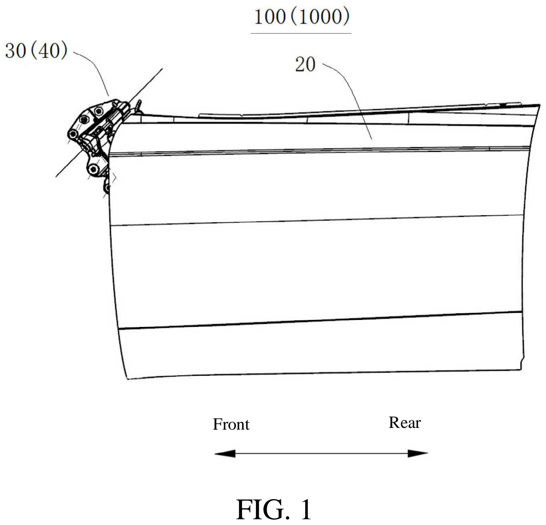

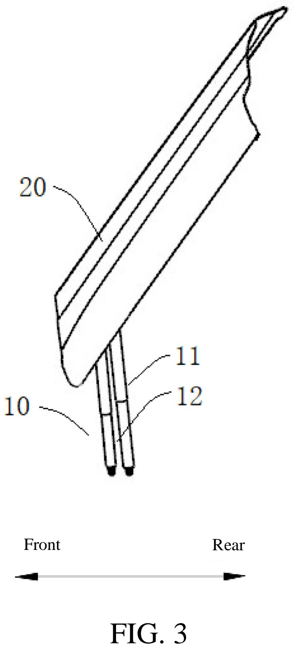

In view of this, as shown in FIG. 1 to FIG. 9, the present disclosure provides a supporting rod assembly 10. The supporting rod assembly 10 may be applied to a vehicle door 20 of a vehicle, and in particular, to a butterfly door. The supporting rod assembly 10 includes a first supporting rod 11 and a second supporting rod 12, one end of the first supporting rod 11 and one end of the second supporting rod 12 are separately configured to be hinged to the vehicle door 20, and the other end of the first supporting rod 11 and the other end of the second supporting rod 12 are separately configured to be hinged to a vehicle body 200, where at least one of the first supporting rod 11 and the second supporting rod 12 is an electric supporting rod.

In the supporting rod assembly 10 provided in the present disclosure, a double-supporting rod solution is used, that is, the first supporting rod 11 and the second supporting rod 12 are provided. When the supporting rod assembly 10 is applied to the vehicle door 20 (such as a butterfly door) of the vehicle 1000, it is beneficial to improve support strength of the supporting rod assembly 10. In this way, even when the vehicle door 20 (especially, the butterfly door) has a large weight, the supporting rod assembly 10 provided in the present disclosure is beneficial to ensure a support effect for the vehicle door 20, to facilitate providing a force for normal opening and closing of the vehicle door 20.

In addition, in the present disclosure, because at least one of the first supporting rod 11 and the second supporting rod 12 is the electric supporting rod, the vehicle door 20 (for example, a butterfly door) can be opened and closed electrically, thereby improving door opening and door closing operation experience of a user.

It should be noted that, in addition to being applied to the butterfly door, the supporting rod assembly 10 in the present disclosure may also be applied to a vehicle door of another form, for example, may also be applied to a scissor door. This is not limited in the present disclosure.

In the present disclosure, only one of the first supporting rod 11 and the second supporting rod 12 may be the electric rod, or both of the first supporting rod 11 and the second supporting rod 12 are the electric rods. This is not limited in the present disclosure. Optionally, in an embodiment of the present disclosure, one of the first supporting rod 11 and the second supporting rod 12 is an electric supporting rod, and the other is a mechanical supporting rod. In this way, it is beneficial to provide sufficient support for opening and closing the vehicle door 20 (for example, a butterfly door), and it is beneficial to reduce costs.

Specific connection positions of the first supporting rod 11, the second supporting rod 12, the vehicle body 200, and the vehicle door 20 are not limited in the present disclosure. For example, one end of the first supporting rod 11 and one end of the second supporting rod 12 may be arranged close to a hinge joint that is used by the vehicle door 20 to be hinged to the vehicle body 200, and the other end of the first supporting rod 11 and the other end of the second supporting rod 12 may be arranged close to a connection potion between a lower end of column A of the vehicle 1000 and a door sill.

During specific arrangement, arrangement design and adjustment in an installation area may be performed based on parameters such as a mass and a center of mass of the vehicle door 20 (such as a butterfly door), to meet opening and closing actions of the vehicle door 20 and ensure that the first supporting rod 11 and the second supporting rod 12 do not interfere with each other during a movement process. In addition, it is best to ensure parallelism in real time for the two supporting rods in the movement process, to ensure aesthetics.

Based on this, as shown in FIG. 1 to FIG. 3, the first supporting rod 11 and the second supporting rod 12 may be arranged along a longitudinal direction of the vehicle 1000, and a connection line between the first supporting rod 11 and the second supporting rod 12 may be parallel to a longitudinal central plane of the vehicle 1000. That is, the first supporting rod 11 and the second supporting rod 12 may be located on an arrangement line parallel to the longitudinal center plane of the vehicle 1000. In this way, it is beneficial to meet opening and closing actions of the vehicle door 20 (such as a butterfly door) and ensure that the first supporting rod 11 and the second supporting rod 12 do not interfere with each other during the movement process. In addition, the parallelism may also be ensured for aesthetics.

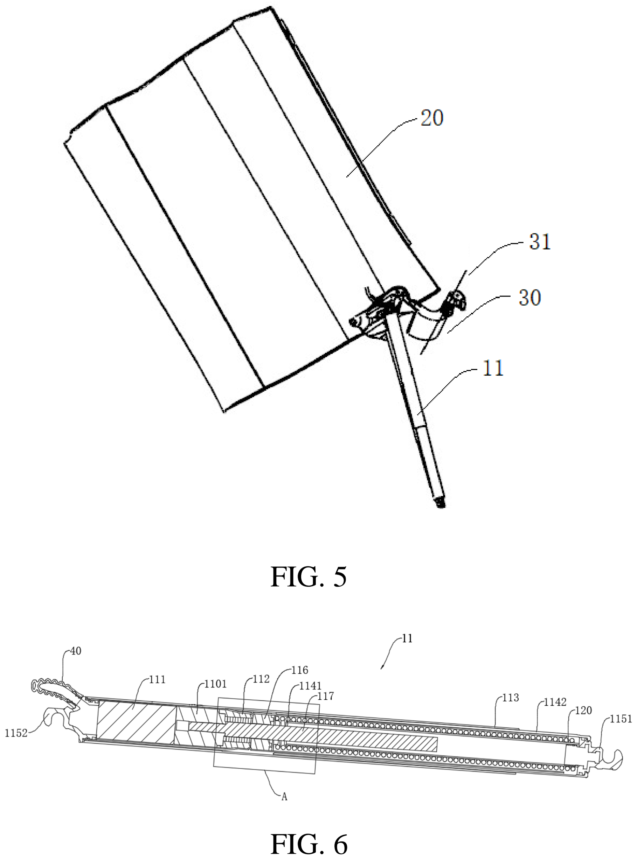

As shown in FIG. 1 to FIG. 4, the first supporting rod 11 may be located on a rear side of the second supporting rod 12 along a front-rear direction of the vehicle 1000, and heights of the first supporting rod 11 and the second supporting rod 12 may be designed such that when the vehicle door is in an open state, a height of the first supporting rod 11 is greater than a height of the second supporting rod 12. The rear side of the second supporting rod 12 is a side of the second supporting rod 12 that is hinged to the vehicle body 200 and that faces away from the vehicle door 20. In other words, when the supporting rod assembly 10 is mounted on the vehicle body 200 and the vehicle door 20, the second supporting rod 12 is located in front of the first supporting rod 11 in the front-rear direction of the vehicle. In this embodiment, when the vehicle door is in an open state, the first supporting rod 11 and the second supporting rod 12 are located on the arrangement line parallel to the longitudinal center plane of the vehicle, and the height of the first supporting rod 11 is greater than the height of the second supporting rod 12. In this way, when the vehicle door is in an open state, the vehicle door is viewed from the rear of the vehicle toward the front of the vehicle (that is, viewed from a rear perspective), it is beneficial to enable the second supporting rod 12 to be shielded by the first supporting rod 11 at the rear, as shown in FIG. 5, thereby helping further improve aesthetics.

Optionally, when the vehicle door is in a closed state, the height of the first supporting rod 11 may also be greater than the height of the second supporting rod 12.

It can be understood that the open state of the vehicle door 20 herein may refer to a state in which the vehicle door 20 is in a fully open position, or may refer to a state of any opening degree position.

In this case, the first supporting rod 11 may be an electric supporting rod, and the second supporting rod 12 may be a mechanical supporting rod. That is, the electric rod is located behind the mechanical rod. A front end of the vehicle door 20 (for example, a butterfly door) is hinged to the vehicle body 200, and the electric supporting rod is arranged at the rear, helping to control one end (for example, an electric supporting rod second end 1152 below) of the electric supporting rod that is hinged to the vehicle door 20 to be away from the hinge joint between the vehicle door 20 and the vehicle body 200. According to the principle of leverage, this arrangement facilitates adjusting an opening degree of the vehicle door 20 with a small force.

In a process of opening the vehicle door 20, with changes of a mass, a center of mass, and an opening angle of the vehicle door 20, because the center of mass is elevated in the movement process, the vehicle door 20 is very easy to quickly fall and damage a body part of a vehicle rider. In view of this, in an embodiment of the present disclosure, the supporting rod assembly 10 is configured as: when the first supporting rod 11 and/or the second supporting rod 12 (for example, the first supporting rod 11) that are/is configured as an electric supporting rod(s) are/is in a power-off state, an end (for example, an electric supporting rod second end 1152 below) that is on the electric supporting rod and that is hinged to the vehicle door can hover at any position on a preset stroke, to avoid a case in which the vehicle door 20 quickly falls and damages a body part of a vehicle rider. That is, in this embodiment, the electric supporting rod is designed as an electric supporting rod having a hover function. To achieve the objective, it can be known from a torque equilibrium equation that a total mechanical torque MF provided by the supporting rod assembly 10 (including a mechanical torque provided by the first supporting rod 11 and the second supporting rod 12) may be balanced with a real-time gravitational torque MG of the vehicle door 20. In this way, after an electrical signal of the electric supporting rod is triggered, when feeding or a motor 111 is damaged, it is ensured that the vehicle door can be manually opened and closed and hover in any position.

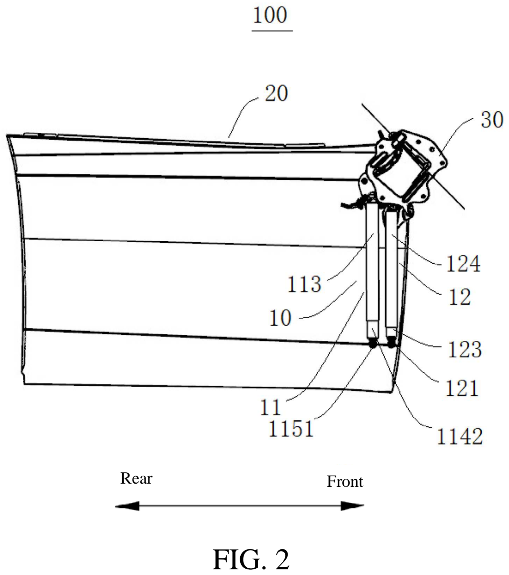

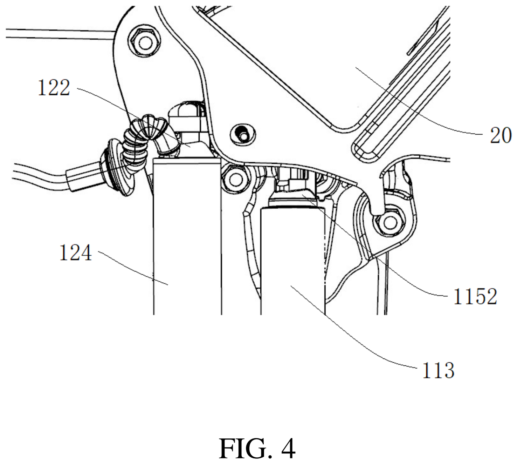

A specific structure of the electric supporting rod is not limited in the present disclosure. Optionally, as shown in FIG. 4, FIG. 6, and FIG. 7, the electric supporting rod may include a motor 111, a limiting member 112, an outer sleeve 113, a first inner pipe 1141, an electric supporting rod first end 1151, and an electric supporting rod second end 1152. The first inner pipe 1141 is arranged inside the outer sleeve 113 in a movable manner along an axial direction of the outer sleeve 113, so that a length by which an end of the first inner pipe 1141 extends out of the outer sleeve 113 can be adjusted, that is, referring to FIG. 2 and FIG. 6, a length by which an end that is of the first inner pipe 1141 and that is hinged to the vehicle body extends out of the outer sleeve 113 can be adjusted, thereby changing an overall length of the electric supporting rod. The motor 111 and the limiting member 112 are fixedly arranged inside the outer sleeve 113. The electric supporting rod first end 1151 is connected to one end of the first inner pipe 1141 (that is, an end away from the electric supporting rod second end 1152), and is configured to be hinged to the vehicle body 200, and the electric supporting rod second end 1152 is connected to one end of the outer sleeve 113 (that is, an end away from the electric supporting rod first end 1151), and is configured to be hinged to the vehicle door 20. An output axis of the motor 111 is in transmission connection with the other end of the first inner pipe 1141, to drive the first inner pipe 1141 to move along the axial direction of the outer sleeve 113. The limiting member 112 is configured to lock relative positions of the first inner pipe 1141 and the outer sleeve 113 when the motor 111 is in a power-off state, that is, the first inner pipe 1141 and the outer sleeve 113 are locked in both an axial direction and a circumferential direction, so that the electric supporting rod second end 1152 can hover at any position on the preset stroke.

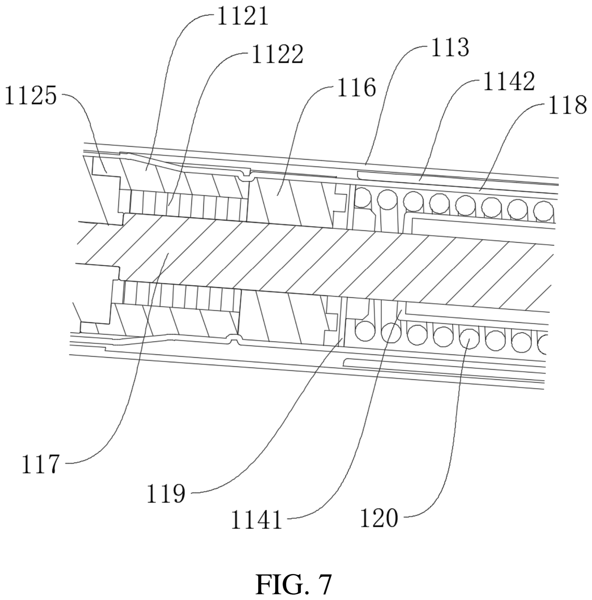

The manner of transmission connection between the motor 111 and the first inner pipe 1141 and an installation position of the limiting member 112 are not limited in the present disclosure. Optionally, as shown in FIG. 6 and FIG. 7, the electric supporting rod may further include a coupling 116 and a lead screw 117. The output axis of the motor 111 is in transmission connection with the lead screw 117 by the coupling 116. The first inner pipe 1141 is sleeved on the lead screw 117 and forms a guide screw-nut mechanism with the lead screw 117. That is, the first inner pipe is configured as a nut in the guide screw-nut mechanism, and the lead screw 117 is configured as a guide screw in the guide screw-nut mechanism. The limiting member 112 is configured to limit rotation of the lead screw 117 when the motor 111 is in a power-off state, to lock the first inner pipe 1141 in the outer sleeve 113 when the motor 111 is in a power-off state, so that the electric supporting rod second end 1152 can hover at any position on the preset stroke.

During operation, the output axis of the motor 111 rotates forward or backward, and transmits power to the lead screw 117 by using the coupling 116, to drive the lead screw 117 to rotate. In a rotation process of the lead screw 117, the first inner pipe 1141 may move along an axial direction of the guide screw, to achieve expansion and contraction, thereby adjusting a position of the electric supporting rod second end 1152. In this process, the output axis of the motor 111, the coupling 116, and the lead screw 117 only rotate, and do not move axially.

It can be understood that, in addition to the foregoing case in which rotation of the lead screw 117 is limited by setting the limiting member 112, so that the electric supporting rod second end 1152 can hover at any position, in other embodiments of the present disclosure, a motor 111 with a built-in locking structure may also be used. When the motor 111 stops rotating forward or backward, the built-in locking structure may be used to limit rotation of an output axis of the motor 111.

As shown in FIG. 6 and FIG. 7, the electric supporting rod may further include a mounting pipe 118, a partition plate 119, a second inner pipe 1142, and a first spring 120 (such as a coil spring). The mounting pipe 118 is fixedly arranged inside the outer sleeve 113, an end of the mounting pipe 118 is connected to the electric supporting rod second end 1152, and the motor 111, the coupling 116, and the partition plate 119 are axially arranged inside the mounting pipe 118 sequentially. The second inner pipe 1142 is sleeved on the mounting pipe 118, and is located between the mounting pipe 118 and the outer sleeve 113. An end of the second inner pipe 1142 away from the motor 111 is connected to the electric supporting rod first end 1151. The first spring 120 is sleeved on an outer side of the first inner pipe 1141, and one end of the first spring 120 is connected to the partition plate 119, and the other end is connected to the second inner pipe 1142. In this way, when the electric supporting rod first end 1151 moves along the axial direction of the outer sleeve 113, the second inner pipe 1142 and the other end of the coil spring may be driven to move along a same direction. In this process, the first spring 120 is stretched or compressed. The first spring 120 may provide an elastic force in a moving process of the first inner pipe 1141 and the second inner pipe 1142, helping to make the moving process of the first inner pipe 1141 and the second inner pipe 1142 smoother.

In this embodiment, referring to FIG. 6 and FIG. 7, the first inner pipe 1141, a part of the mounting pipe 118 close to the electric supporting rod first end 1151, and a part of the second inner pipe 1142 may function as a guide for the first spring 120, to avoid instability of radial bending in a process of pulling and compressing the spring 120.

Referring to FIG. 7, the mounting pipe 118 may include a large diameter section and a small diameter section. The motor 111, the coupling 116, and the limiting member 112 may be arranged in the large diameter section. The small diameter section may be located between the first inner pipe 1141 and the second inner pipe 1142.

As shown in FIG. 6 and FIG. 7, the electric supporting rod may further include a decelerator 1101 arranged in the mounting pipe 118. The decelerator 1101 is located between the motor 111 and the limiting member 112 in an axial direction of the mounting pipe 118.

The output axis of the motor 111 is in transmission connection with the decelerator 1101, to reduce a rotational speed of the motor 111.

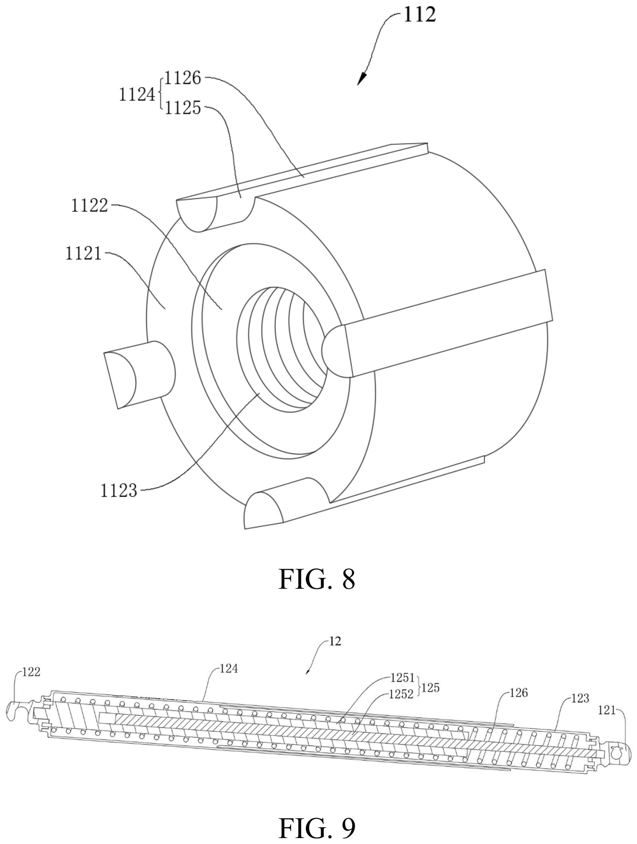

A specific structure of the limiting member 112 is not limited in the present disclosure. As shown in FIG. 7 and FIG. 8, in an embodiment of the present disclosure, the limiting member 112 may include a cylindrical housing 1121 and multiple friction plates 1122, the multiple friction plates 1122 are arranged in a stacked manner inside the cylindrical housing 1121 along an axial direction of the cylindrical housing 1121, the lead screw 117 penetrates the cylindrical housing 1121 and is located at the multiple friction plates 1122 in the housing, and the multiple friction plates 1122 are configured to provide damping that restricts rotation of the lead screw 117 when the motor 111 is in a power-off state. In this embodiment, the multiple friction plates 1122 are provided with a via 1123, and the lead screw is frictionally matched with an inner wall of the via 1123. The multiple friction plates 1122 enables, through friction between sheets, the lead screw 117 that is rotating to decelerate and stop rotating when the motor 111 is in a power-off state.

Referring to FIG. 7 and FIG. 8, a side wall of the cylindrical housing 1121 may be provided with a protrusion 1124, and the protrusion 1124 has a first plugging segment 1125 projecting from one of end surfaces of the cylindrical housing 1121 and a second plugging segment 1126 located on the side wall. The first plugging segment 1125 may be configured to be connected to a socket on the decelerator 1101, and the second plugging segment 1126 may be configured to be plugged and matched with a groove (not shown) on an inner wall of the mounting pipe 118, to be connected to implement axial and peripheral limiting of the limiting member 112.

A specific structure of the mechanical supporting rod (such as the second supporting rod 12) is also not limited in the present disclosure. Optionally, as shown in FIG. 9, in an embodiment of the present disclosure, the first supporting rod 11 or the second supporting rod 12 (for example, the second supporting rod) configured as a mechanical supporting rod may be a balance rod, including a balance rod first end 121, a balance rod inner pipe 123, a gas spring 125, a balance rod outer pipe 124, a second spring 126, and a balance rod second end 122. The balance rod first end 121 is connected to an end of the balance rod inner pipe 123 and is configured to be hinged to the vehicle body 200, and the balance rod second end 122 is connected to an end of the balance rod outer pipe 124 and is configured to be hinged to the vehicle door 20. A pressure cylinder 1251 of the gas spring 125 is located inside the balance rod outer pipe 124 and is connected to the balance rod second end 122, and a piston rod 1252 of the gas spring 125 is connected to the balance rod first end 121. The second spring 126 (such as a coil spring) is sleeved on an outer side of the gas spring 125, one end of the second spring 126 is connected to the pressure cylinder 1251, and the other end is connected to an end that is of the balance rod inner pipe 123 and that is configured to be connected to the balance rod first end 121 (that is, the balance rod inner pipe 123 is at an end on the right side in a drawing direction of FIG. 9). In this embodiment, because the gas spring 125 in the balance rod is mounted in the balance rod and has a particular pressure, in a process of opening the vehicle door 20 and gradually extending the electric supporting rod (the first supporting rod 11), the balance rod may be driven to be synchronously extended, so that the balance rod outer pipe 124 and the balance rod inner pipe 123 move relative to each other. Similarly, in a process of closing the vehicle door 20 and gradually shortening the electric supporting rod, the balance rod may be driven to be synchronously shortened, so that the balance rod outer pipe 124 and the balance rod inner pipe 123 move relative to each other. The working principle of the balance rod is well known by a person skilled in the art, and details are not described herein again.

By arranging the second spring 126, when the balance rod first end 121 and the balance rod inner pipe 123 move along an axial direction of the balance rod outer pipe 124, the second spring 126 is stretched or compressed. In this case, the second spring 126 may provide an elastic force in a moving process of the balance rod inner pipe 123 and the piston rod 1252 of the gas spring 125, helping to make the moving process of the balance rod inner pipe 123 and the piston rod 1252 of the gas spring 125 smoother.

It can be understood that, in other embodiments of the present disclosure, the mechanical supporting rod (for example, the second supporting rod 12) may be a gas spring-type mechanical supporting rod.

According to the foregoing solution, in the present disclosure, mechanical energy storage is added in a limited arrangement space. This not only ensures arrangement of a supporting rod mechanism in a limited design space, but also meets opening and closing actions of a large-mass vehicle door 20 (for example, a butterfly door), and implements electrification of opening and closing of the vehicle door 20 (for example, a butterfly door).

As shown in FIG. 1 to FIG. 6, according to a second aspect of the present disclosure, a vehicle door assembly 100 is provided. The vehicle door assembly 100 includes a vehicle door 20 (such as a butterfly door) and the foregoing supporting rod assembly 10. The vehicle door may be hinged to a vehicle body 200 by a hinged structure 40, and one end of the first supporting rod 11 and one end of the second supporting rod 12 are separately hinged to the vehicle door 20. Herein, the hinged structure 40 may include, for example, a hinge 30 shown in FIG. 1, FIG. 2, and FIG. 5, and the vehicle door 20 may rotate about a rotation center line 31 of the hinge.

As shown in FIG. 1, according to another aspect of the present disclosure, a vehicle 1000 is provided. The vehicle 1000 includes the foregoing vehicle door assembly 100.

The preferred implementations of the present disclosure are described in detail above with reference to the accompanying drawings. However, the present disclosure is not limited to the specific details in the foregoing implementations, multiple simple deformations may be made to the technical solution of the present disclosure within a range of the technical concept of the present disclosure, and these simple deformations fall within the protection scope of the present disclosure.

It should be additionally noted that, the specific technical features described in the foregoing specific implementations may be combined in any proper manner in a case without conflict, and to avoid unnecessary repetition, various possible combinations are not otherwise explained in the present disclosure.

In addition, different implementations of the present disclosure may also be arbitrarily combined without departing from the idea of the present disclosure, and these combinations shall still be regarded as content disclosed in the present disclosure.

## Claims

1. A supporting rod assembly (10), applied to a vehicle door (20) of a vehicle (1000), and comprising:
a first supporting rod (11), one end of the first supporting rod (11) being configured to be hinged to the vehicle door (20), and the other end of the first supporting rod (11) being configured to be hinged to a vehicle body (200); and
a second supporting rod (12), one end of the second supporting rod (12) being configured to be hinged to the vehicle door (20), and the other end of the second supporting rod (12) being configured to be hinged to the vehicle body (200);
wherein at least one of the first supporting rod (11) and the second supporting rod (12) is an electric supporting rod.

2. The supporting rod assembly (10) according to claim 1, wherein one of the first supporting rod (11) and the second supporting rod (12) is an electric supporting rod, and the other is a mechanical supporting rod.

3. The supporting rod assembly (10) according to claim 1 or 2, wherein the first supporting rod (11) and the second supporting rod (12) are arranged along a longitudinal direction of the vehicle (1000), and a connection line between the first supporting rod (11) and the second supporting rod (12) is set to be parallel to a longitudinal central plane of the vehicle (1000).

4. The supporting rod assembly (10) according to claim 3, wherein the first supporting rod (11) is located on a rear side of the second supporting rod (12) along a front-rear direction of the vehicle (1000), and heights of the first supporting rod (11) and the second supporting rod (12) are designed such that when the vehicle door (20) is in an open state, a height of the first supporting rod (11) is greater than a height of the second supporting rod (12).

5. The supporting rod assembly (10) according to any one of claims 1 to 4, wherein the first supporting rod (11) is an electric supporting rod, and the second supporting rod (12) is a mechanical supporting rod.

6. The supporting rod assembly (10) according to any one of claims 1 to 5, wherein the supporting rod assembly (10) is configured as: when the electric supporting rod is in a power-off state, an end that is on the electric supporting rod and that is configured to be hinged to the vehicle door (20) can hover at any position on a preset stroke.

7. The supporting rod assembly (10) according to claim 6, wherein the electric supporting rod comprises a motor (111), a limiting member (112), an outer sleeve (113), a first inner pipe (1141), an electric supporting rod first end (1151), and an electric supporting rod second end (1152);
the first inner pipe (1141) is arranged inside the outer sleeve (113) in a movable manner along an axial direction of the outer sleeve (113), so that a length by which an end of the first inner pipe (1141) extends out of the outer sleeve (113) can be adjusted, and the motor (111) and the limiting member (112) are fixedly arranged inside the outer sleeve (113);
the electric supporting rod first end (1151) is connected to one end of the first inner pipe (1141), and is configured to be hinged to the vehicle body (200), and the electric supporting rod second end (1152) is connected to one end of the outer sleeve (113), and is configured to be hinged to the vehicle door (20);
an output axis of the motor (111) is in transmission connection with the other end of the first inner pipe (1141), to drive the first inner pipe (1141) to move along the axial direction of the outer sleeve (113); and
the limiting member (112) is configured to lock relative positions of the first inner pipe (1141) and the outer sleeve (113) when the motor (111) is in a power-off state, so that the electric supporting rod second end (1152) can hover at any position on the preset stroke.

8. The supporting rod assembly (10) according to claim 7, wherein the electric supporting rod further comprises a coupling (116) and a lead screw (117);
the output axis of the motor (111) is in transmission connection with the lead screw (117) by the coupling (116), and the first inner pipe (1141) is sleeved on the lead screw (117) and forms a guide screw-nut mechanism with the lead screw (117); and
the limiting member (112) is configured to limit rotation of the lead screw (117) when the motor (111) is in a power-off state.

9. The supporting rod assembly (10) according to claim 8, wherein the electric supporting rod further comprises a mounting pipe (118), a partition plate (119), a second inner pipe (1142), and a first spring (120);
the mounting pipe (118) is arranged inside the outer sleeve (113), an end of the mounting pipe (118) is connected to the electric supporting rod second end (1152), and the motor (111), the coupling (116), and the partition plate (119) are axially arranged inside the mounting pipe (118) sequentially;
the second inner pipe (1142) is sleeved on the mounting pipe (118), and is located between the mounting pipe (118) and the outer sleeve (113), and an end of the second inner pipe (1142) away from the motor (111) is connected to the electric supporting rod first end (1151); and
the first spring (120) is sleeved on an outer side of the first inner pipe (1141), and one end of the first spring (120) is connected to the partition plate (119), and the other end is connected to the second inner pipe (1142).

10. The supporting rod assembly (10) according to claim 8 or 9, wherein the limiting member (112) comprises a cylindrical housing (1121) and a plurality of friction plates (1122), the plurality of friction plates (1122) are arranged in a stacked manner inside the cylindrical housing (1121) along an axial direction of the cylindrical housing (1121); and
the lead screw (117) penetrates the cylindrical housing (1121) and is located at the plurality of friction plates (1122) in the cylindrical housing (1121), an inner wall of a via (1123) that is on the plurality of friction plates (1122) and through which the lead screw (117) passes is frictionally matched with the lead screw (117), and the plurality of friction plates (1122) are configured to provide damping that restricts rotation of the lead screw (117) when the motor (111) is in a power-off state.

11. The supporting rod assembly (10) according to claim 10, wherein an outer side wall (1127) of the cylindrical housing (1121) is provided with a protrusion (1124), and the protrusion (1124) has a first plugging segment (1125) projecting from one of end surfaces of the cylindrical housing (1121) and a second plugging segment (1126) located on the outer side wall.

12. The supporting rod assembly (10) according to any one of claims 2 to 11, wherein the mechanical supporting rod is a balance rod, comprising a balance rod first end (121), a balance rod inner pipe (123), a balance rod outer pipe (124), a gas spring (125), a second spring (126), and a balance rod second end (122);
the balance rod first end (121) is connected to an end of the balance rod inner pipe (123) and is configured to be hinged to the vehicle body (200), and the balance rod second end (122) is connected to an end of the balance rod outer pipe (124) and is configured to be hinged to the vehicle door (20);
a pressure cylinder (1251) of the gas spring (125) is located inside the balance rod outer pipe (124) and is connected to the balance rod second end (122), and a piston rod (1252) of the gas spring (125) is connected to the balance rod first end (121); and
the second spring (126) is sleeved on an outer side of the gas spring (125), one end of the second spring (126) is connected to the pressure cylinder (1251), and the other end is connected to an end that is of the balance rod inner pipe (123) and that is configured to be connected to the balance rod first end (121).

13. A vehicle door assembly (100), comprising a vehicle door (20) and the supporting rod assembly (10) according to any one of claims 1 to 12, the vehicle door (20) being hinged to a vehicle body (200) by a hinged structure (40), and one end of the first supporting rod (11) and one end of the second supporting rod (12) being separately hinged to the vehicle door (20).

14. A vehicle (1000), comprising a vehicle door assembly (100) according to claim 13.
